# EUROPEAN PATENT APPLICATION

(11) **EP 4 468 176 A1**
(43) Date of publication of application: **27.11.2024**
(21) Application number: 23174591.0
(22) Date of filing: 22.05.2023
(51) Int. Cl.: G06F 18/22, G06F 18/2413, G06F 18/2433, G06F 18/28, G06F 18/214, G06V 10/74, G06V 10/764, G06V 10/774, G06V 10/778, G06V 10/82, G06F 21/57, H04L 9/40

(54) **CLASSIFYING DATA ITEMS USING REGULARISED SIMILARITY VALUES**

(71) Applicant: Microsoft Technology Licensing, LLC, Redmond, WA 98052-6399 (US)
(72) Inventor: LONGDEN, Camilla Alice, Cambridge, CB1 2FB (GB); MASSICETI, Daniela, North Sydney, 2060 (AU); GRAYSON, Martin Philip, Cambridge, CB1 2FB (GB)
(74) Representative: Page White Farrer

(57) **Abstract**

A computer-implemented training method includes receiving a plurality of labelled training data items; generating a training data vector from each training data item; and determining prototype vector representative of training data items. A maximum similarity value between the training data vectors and the prototype vector is identified and stored with the prototype vector. A computer-implemented inference method includes generating an input vector from an input data item; calculating a first similarity value between the input vector and the prototype vector; and calculating a second similarity value based on the first similarity value and the maximum similarity value. The method then determines that the input data item is a member of the class of data items based on the second similarity value. The methods provide lightweight classifiers that can be rapidly trained by non-expert end users for applications such as object detection and cybersecurity risk detection.

## Description

### Background

Few-shot machine learning models may be trained in two phases: a pretraining phase and a personalization phase. The pretraining phase is carried out offline using a large training set. In the personalization phase, the model learns to classify an object not seen in the large training set from a few training data items.

Whilst few-shot machine learning models can be applied to a wide range of classification tasks, they have found particular utility in teachable object recognition, in which a model learns to recognize the presence of a particular object in an image based on a few captured training images. This may be useful for e.g. assisting users in finding personal objects, such as keys or wallets, which may be difficult to detect with existing generic object detection models.

### Summary

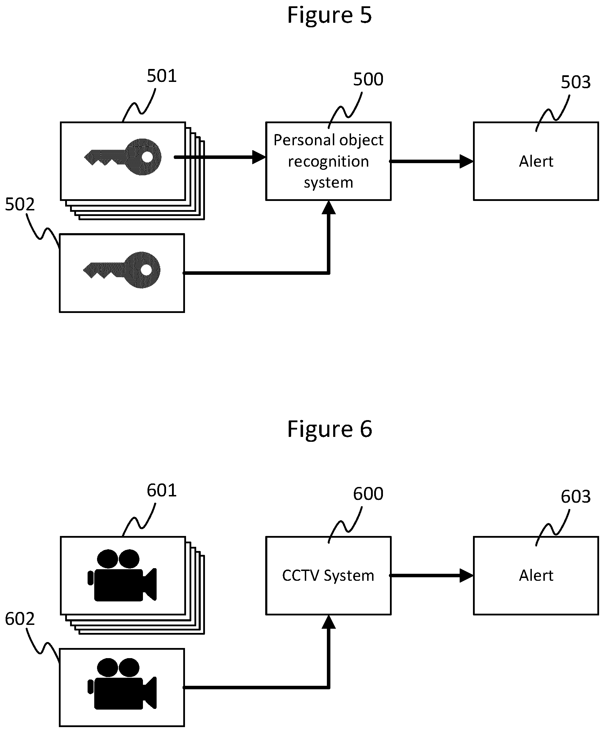

The examples disclosed herein relate to classifying input data items. In examples a maximum similarity value, which is representative of a similarity between a prototype vector and a most similar training data item, is used in the process of calculating a similarity between an input data item and the prototype vector. This gives rise to a lightweight machine-learning classifier that requires relatively little compute resource (e.g. memory, processing resource and consequently power) at inference time to perform classification, rendering it particularly suitable for applications in end-user devices, such as object recognition for visually impaired users using mobile devices as discussed in more detail in relation to Figure 5. Further, examples herein relate to a process of training a machine learning model which involves generating the prototype vector and calculating the maximum similarity value. This provides a lightweight means of training the model based on a few examples, which requires relatively little compute resource and can be carried out by an end user. This again renders the techniques suitable for use in applications where a non-expert end user captures or otherwise identifies training data, such as in the examples of Figures 5 to 7.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

### Brief Description of the Drawings

To assist understanding of the present disclosure and to show how embodiments may be put into effect, reference is made by way of example to the accompanying drawings in which:
Figure 1 is a schematic diagram illustrating an example machine learning system;
Figure 2A is a schematic flowchart showing an example method of pretraining an example model;
Figure 2B is a schematic flowchart showing an example method of personalizing an example model;
Figures 3A and 3B are schematic diagrams illustrating vectors of training data items in vector space;
Figure 4 is a schematic flowchart showing an example inference method;
Figure 5 is a schematic diagram of an example teachable object recognition system;
Figure 6 is a schematic diagram of an example closed-circuit television monitoring system;
Figure 7 is a schematic diagram illustrating various further example systems;
Figure 8 is an example of a computing system.

### Detailed Description

In overview, examples of the present disclosure provide an improved classification method using few-shot machine learning models such as a ProtoNets model.

The inference-time steps carried out using the ProtoNets model involve generating a similarity score reflective of the similarity between learned prototype vectors respectively corresponding to a plurality of classes and an input vector. The prototype is an average embedding learned from training data items of that class. Typically, these similarity scores are then processed using a softmax function to produce a score for each class.

In the examples herein, the ProtoNets models are instead used for binary classification at inference time. That is to say, a determination is made as to whether the input vector belongs to a certain class, based on the similarity score between the input vector and the prototype vector for that class. Determining whether the input vector is the same class as the prototype vector involves setting an appropriate threshold of the similarity score, which may involve experimentation to "tune" the correct value.

Difficulties may arise in relation to the range of values that the similarity score can take, and the distribution of values across that range. For example, score may be a Euclidean distance, which is unbounded at the upper end. Alternatively, cosine similarity scores may be used, which range from -1 to +1, with +1 representative of a vector of the same direction as the prototype in a high dimensional embedding space and -1 representative of a vector in the opposite direction to the prototype. It is not the case that the values are evenly distributed across the range, with parts of the range being unlikely to be used. Accordingly, arriving at the appropriate threshold is difficult, because minor changes in the threshold value can undesirably substantially change the balance between precision and recall provided by the classifier.

Examples herein provide a technique for regularising the similarity score based on a maximum similarity between the prototype vector and the training samples used to learn the prototype vector. This results in a score that has a more useful range, and thus is significantly easier to tune and is more readily user-understandable.

The techniques herein may determine based on the similarity score, whether an input data item is the same class as the prototype vector. According to the determination, the systems and methods herein may carry out an action. Depending on the circumstances, this may involve at least one of: modifying an image; carrying out a security mitigation action; activating an alarm system; providing control input to a machine or vehicle; or providing an output alert, such as an auditory alert. Modifying an image may comprise obscuring a part of the image, or labelling the image. The security mitigation action may be adjusting firewall settings or access rights. The control input to the vehicle may cause the vehicle to change velocity or direction. The control input to the machine may alter conditions of an industrial process or environment.

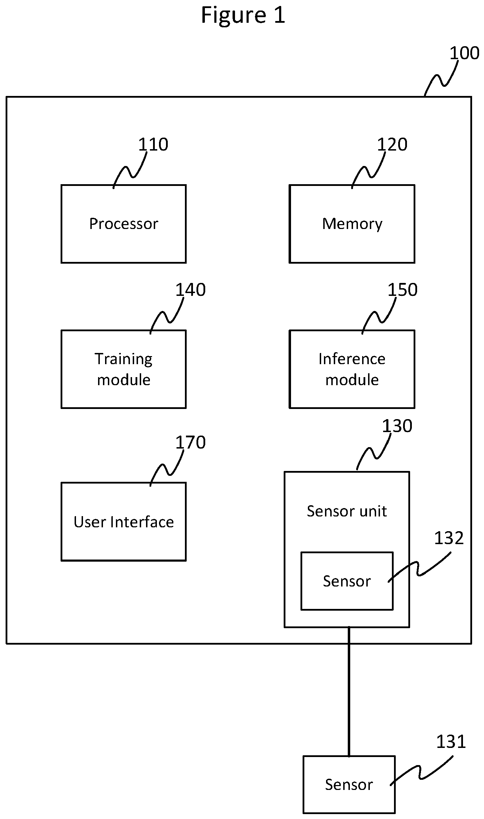

Figure 1 illustrates an example machine learning system 100. The machine learning system 100 comprises a processor 110 and a memory 120. In some examples, the machine learning system 100 comprises a user interface 170, which may for example comprise any suitable input and output equipment, including keyboards, mice, monitors, or other screens, speakers, microphones and the like.

The system 100 may also comprise a sensor unit 130. The sensor unit 130 is configured to receive sensor data. In some examples, the sensor unit 130 is configured to receive sensor data from remote sensors 131, for example over a suitable wired or wireless network connection. In other examples, the sensor unit 130 itself comprises one or more sensors 132 from which the sensor data is received.

A wide range of sensor data and/or sensors are envisaged. These include cameras, microphones, environmental sensors, and the like. Particular types of sensors and associated sensor data are discussed in more detail below in relation to Figures 5-7.

The system 100 comprises a trainer configured to train a ProtoNets machine learning model. The trainer is also referred to herein as a training module 140.

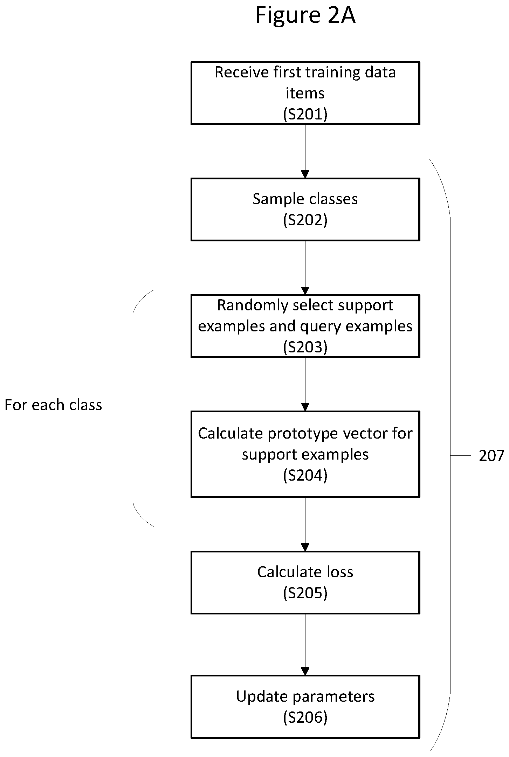

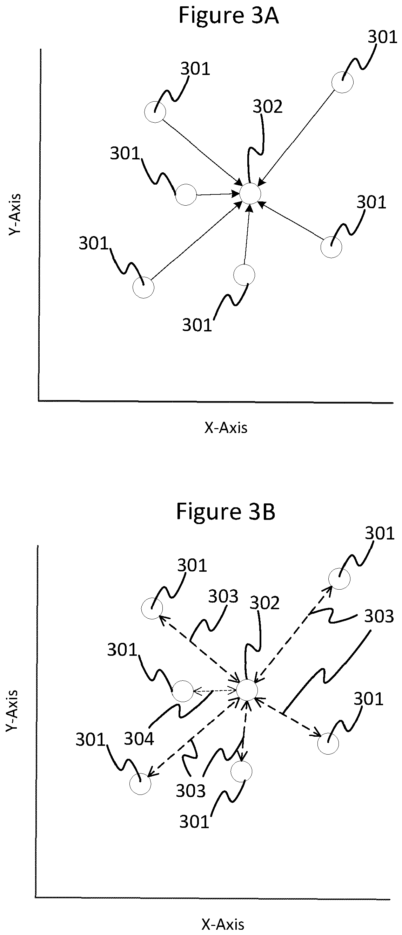

Figures 2A-B and 3A-B schematically illustrate the process of training the model, which may be carried out by training module 140.

ProtoNets are trained in two phases. In the first phase, the model is trained on a relatively large dataset (e.g. in the order of thousands of training data items). This first (or "pretraining" phase), which is discussed in detail in section 2.2 of the ProtoNets paper is discussed in brief below with respect to Figure 2A.

In step S201 of Figure 2A, the training data is received. The training data comprises a plurality of training data items, which are referred to herein as "first" training data items to distinguish them from the "second" training data items used later in the personalisation phase. The first training data items each belong to one of a plurality of classes, with each training example having a respective label indicating the class to which it belongs.

Subsequently, the first training data items are used to train the ProtoNets model. In general, the intuition behind the training process is that there is an embedding (i.e. a representation of the training data in high-dimensional vector space) in which points cluster around a single prototype vector for each class. Accordingly, the aim of the pretraining process is to learn that embedding.

In step S202, a random sample of classes is selected. That is to say, a subset of the total number of classes are selected at random, so as to give a reduced set of classes.

In step S203, for a first of the randomly sampled classes, two random subsets of training data examples, respectively referred to as the support examples and query examples, are drawn from the first training data item having that class label.

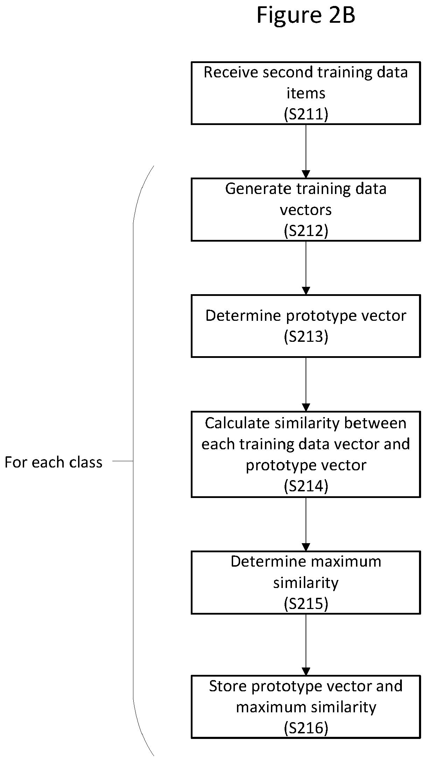

In step S204, a prototype vector for the class is calculated from the support examples. This is achieved by generating vectors from each of the support examples, using an embedding function with learnable parameters. Different types of embedding functions with learnable parameters may be used in different applications and are discussed in more detail below in relation to Figure 2B. The generated vectors corresponding to each support example are averaged to form the prototype.

Steps S203 and S204 are then repeated for each class of the random sample, so as to generate a prototype for each class in the random sample.

Subsequently, in step S205, a loss is calculated based on the query examples associated with each class. The loss reflects the negative log-probability of the query examples of the true class (i.e. the label associated with the training data item forming a query example).

Update of the parameters of the embedding function then occurs in step S206. This update minimizes the loss, for example using stochastic gradient descent and an optimiser such as Adam.

The steps S202-S206 form a single training episode 207, as illustrated in Figure 2A. The training process comprises a plurality (e.g. several thousand) training episodes. The result of this pre-training process is the parameters of the embedding function.

Turning now to Figure 2B, the second (or "personalisation") phase of the training process is discussed.

In step S211, a plurality of second training data items are received.

In some examples, the training data items may be received from the sensor unit 130. That is to say, the training data items may comprise sensor data, such as captured images or audio. However, in other examples the training data items may be received via another route, such as over a suitable network connection.

Each training data item has a label indicative of the class to which it belongs. The label may be manually applied, with the training data items annotated or labelled in advance by a human.

Alternatively, the label may be inferred or automatically applied. For example, it may be apparent from the circumstances in which the training data items are captured what the label is. As discussed in more detail below, training data items may be captured by a user, in response to a prompt. In such cases, it is assumed that the captured items have a particular label.

The plurality of second training data items comprises data items corresponding to a plurality of different classes. As the techniques discussed are few-shot learning approaches, only a relatively small number of training data items may be received for each class. For example, under 10 (e.g. 5) training data items may be received.

Furthermore, the classes of the second training data items need not (and indeed generally will not) correspond to the classes used in the pretraining process.

In step S212, training data vectors are generated from each second training data item. The training data vectors are a representation of the second training data item in multidimensional vector space, also referred to herein as an embedding of the training data item. The embedding is generated using the embedding function having the parameters learned in the pretraining phase.

The process of generating the training data vector from the training data items will vary depending upon the type or modality of the training data items. In other words, the process of generating the embedding carried out by the embedding function differs for images compared to audio or text training data. However, suitable techniques exist for generating embeddings for these modalities.

For example, in the case of images, a suitable embedding model may be used to generate the embedding. The embedding model may be a convolutional neural network.

A number of embedding models are available. For example, the embedding model may be an EfficientNet model such as the EfficientNet-B0 model (see e.g. https://keras.io/api/applications/efficientnet/) or a ResNet model (see e.g. https://pytorch.org/hub/pytorch vision resnet/).

In the case of text, suitable embedding models include word2vec, GloVE and the embedding models provided by OpenAI^{®} in association with their GPT models (see e.g. https://platform.openai.com/docs/guides/embeddings/what-are-embeddings). For speech, the training data items may be converted to text using a suitable speech-to-text model and then text embedding models applied. It will be appreciated that in other input modalities, suitable models for generating a representation in vector space exist and may be applied.

In step S213, a prototype vector is determined from the training data vectors. The prototype vector is determined by averaging the training data vectors in a class-wise manner. That is to say, the training data vectors belonging to each class in the second training data items are summed, and then divided by the number of second training data items for that class.

Figure 3A schematically illustrates the process of averaging the training data vectors. A plurality of training data vectors 301 are illustrated as points in 2D vector space. The prototype vector 302 forms an average or centroid of the vectors 301, which are represented as points in the figure. Of course, it will be understood that in reality, the vectors will have many more than two dimensions, and the use of a 2D representation is for illustrative purposes only.

In step S214, a cosine similarity measure is calculated between each of the training vectors of a particular class and the prototype vector for that class. The cosine similarity is the cosine of the angle between the two vectors, and is calculated by scaling the dot product of the vectors by the product of their magnitude.

In step S215, a maximum cosine similarity value of the values calculated in step S204 is identified. In other words, the maximum cosine similarity value is selected from amongst the similarities between the prototype vector and the training vectors. As the cosine similarity value reflects the similarity between the prototype vector and the respective training vector, the training vector with the maximum cosine similarity value will represent the most similar training vector to the prototype. That is to say, the "most similar" training data vector to the prototype is the training data vector that has the maximum similarity value amongst the training examples. Again, this is repeated per class.

Figure 3B schematically illustrates the identification of the maximum cosine similarity value. The reference numeral 303 indicates the similarity, and the reference numeral 304 represents the maximum similarity. The maximum cosine similarity 304 is the similarity between the prototype vector and the most proximate training data item in vector space.

In step S206, the prototype vector 302 and the maximum cosine similarity value for each class are stored in memory 120. These two outputs per class are effectively the output of the personalization phase of the training process, which are then used in the subsequent inference process.

Returning to Figure 1, the system 100 furthermore comprises a classifier. The classifier may also be referred to as an inference module 150 herein. The inference module 150 is configured to classify an input data item.

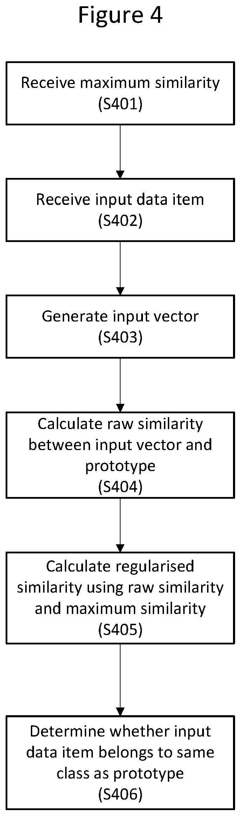

Figure 4 schematically illustrates an inference process, which may be carried out by the inference module 150. The inference process determines whether an input data item corresponds to a selected class of the plurality of classes in the second training data items. That is to say, the inference process determines whether the input data item belongs to the same class as a selected class in the training data. For example, in object recognition in images, the determination is whether or not the target object corresponding to the class is present in an input image. Accordingly, it is effectively a binary classification process.

Accordingly, in some examples, the process discussed below is preceded by a selection of one of the plurality of classes. For example, a user may make the selection. In the object recognition example, the user selects which object they are looking for in an input image. In other examples, the selection may be made automatically without user input, for example based on context (e.g. a user's location, prestored settings or some other contextual data). In other examples, the process may be applied for each class in the plurality of classes, rather than making a selection.

In step S401, the maximum cosine similarity value 304 for the selected class is received. For example, the value 304 is retrieved from memory 120.

In step S402, an input data item is received. The input data item is a data point to be classified by the inference module 150. The input data item may for example be an input data item received via the sensor unit 130.

In step S403, an input vector is generated from the input data item. The input vector is embedded in the same vector space as the training data items. Accordingly, this step is carried out using the same technique used to convert the training data items to training data vectors, as discussed above.

In step S404, a first cosine similarity value is calculated from the input vector and the prototype vector corresponding to the class of the maximum similarity value stored in memory 120. This can be thought of as a "raw" similarity score.

In step S405, a regularized cosine similarity value (also referred to herein as a second similarity value) is calculated based on the raw cosine similarity value and the maximum cosine similarity value. For example, the raw cosine similarity value is divided by the maximum cosine similarity value.

In step S406, the regularized cosine similarity value is used to determine whether the input data item belongs to the same class as the prototype vector. In one example, a suitable threshold is applied. The threshold may be arrived at by experimentation, e.g. on held-out validation data.

By regularizing the cosine similarity in this manner, the technique effectively acknowledges that it is unrealistic that an input data item will be identical to the prototype vector, which is an artificial combination of all of the training data items. Taking into account the maximum similarity between the prototype and the training data items is an efficient and straightforward means of ensuring that distribution of values across the range is more even, and there is no "dead" region of the range that is unlikely to be occupied. This in turn makes it less likely that minor changes in the threshold result in a drastically different output of the inference process.

It will be understood that the cosine similarity is one example of a similarity measure that may be employed in the examples herein. These include the Euclidian distance, Manhattan distance and angular similarity, and any measures derived therefrom (e.g. reciprocals or normalized versions thereof). In each case, the score is regularized based on the score reflective of the most similar training example. Whilst the techniques are discussed further in the context of similarity measures that are bounded, they likewise apply to unbounded measures (e.g. distances).

Although in the discussion above the training (i.e. both pre-training and personalization) and inference processes are carried out on the same device, that need not be the case. In many cases pre-training will be carried out on a separate device. Personalization and inference may also be carried out on different devices or systems. That said, in many applications of few-shot learning, personalisation and inference will be typically carried out on the same device.

The discussion now turns to various applications of the techniques discussed herein.

Figure 5 illustrates an application of the techniques discussed above to teachable object recognition, for example for users with visual impairment. Figure 5 shows device 500, which corresponds in function to system 100 unless stated otherwise below.

The device 500 is configured to assist a visually impaired user to identify a personal object. Examples of personal objects include keys, wallets or purses, bags and the like. Whilst many generic objects are detectable by pretrained object detectors, such object detectors do not perform satisfactorily in relation to personal items that vary substantially from person to person. That is to say, one end user's keys are unlikely to look the same as another user's keys, and thus pretrained detectors may not be accurate. Accordingly, few-shot learning is particularly apt to learn to recognise these personal items.

In this example, the device 500 takes the form of a mobile device (e.g. a mobile phone or tablet computer), which can be carried on the user's person.

The user (or an assistant/carer thereof dependent on the circumstances) may capture a plurality of images of personal objects whose recognition is desired. For example, a user interface of the device 500 may guide the user in capturing videos of each of their personal objects from a range of angles, whereupon a selection of frames 501 of the videos are used as the training data items.

Accordingly, the device 500 learns the prototype vectors and calculates the maximum cosine values from the frames 501.

Subsequently, the user captures an image 502 with the device 500. The captured image forms the input data item, and the device determines whether the captured image 502 comprises the personal item. Put differently, the device 500 determines whether the personal item is present or not in the captured image 502.

The device 500 is configured to provide an output 503 (i.e. an alert) in response to determining that the captured image 502 comprises the personal item. This may for example be an auditory output. The auditory output may be a navigatory output, which for example assists the user in navigating towards the personal item in spite of their visual impairment. Accordingly, the device 500 may capture a stream of images using a camera of the device 500, and use the device 500 to locate the personal item in an environment (e.g. a room).

In this context, the techniques herein allow the user/developer to more easily set an appropriate threshold. This is of particular assistance because the images may include the object at a distance, and which may have a thus have a relatively low cosine similarity. However, it is desirable to provide positive output even in relation to these relatively low confidence images, so as to guide the user towards likely locations of the object.

Figure 6 illustrates another application of the techniques discussed above to teachable object recognition, this time in the context of closed-circuit television (CCTV). Figure 6 shows system 600, which corresponds in function to system 100 unless stated otherwise below.

In this example, the system 600 is a CCTV control system, for example operated by a user in a CCTV control centre. The training data items take the form of images 601, this time the images being CCTV images received from CCTV cameras. Similarly, the input data item is also an image 602 received from CCTV cameras.

In the example, a user (i.e. an operator of the CCTV system 600), provides user input selecting a plurality of images as comprising objects of interest. This may for example be a suspicious vehicles or persons in the CCTV imagery. The system 600 is then trained using the techniques discussed herein to recognize the one of the same objects of interest in other images, and provide an alert 603 to the user once the object is recognized in another image (e.g. captured by a different camera of the system 600). Advantageously, the techniques allow the object to be recognized on the basis of only a few selected images. Instead of or additionally to the alert, the system 600 may be configured to carry out another action. For example, the CCTV system 600 may transmit a message to alert law enforcement officials, trigger an alarm system, or the like.

A wide range of other examples in teachable object recognition are also envisaged. For example, the techniques may be employed in augmented reality tutorial experiences, for example in factories or other manufacturing settings. In such examples, the techniques may be used to locate tools in the user's environment. In other examples, the techniques may be employed in vehicles, for example in autonomous vehicles. The techniques may also use images that are non-visual frequency, such as infrared images. The images may be medical images, for example x-ray images, magnetic resonance images or computerized tomography. In these examples, the system may be configured to provide alerts, and/or take other actions in response to recognizing an object. For example, in vehicles, the system may control the vehicle (e.g. provide control input to one or more vehicle control system, such as changing velocity by applying brakes or acceleration, or changing direction providing steering input). In some examples, the system may perform an action (i.e. a modification) on an image, such as the input image itself (e.g. blurring or obscuring an image in response to recognising an object therein, labelling the image either directly or in the metadata thereof).

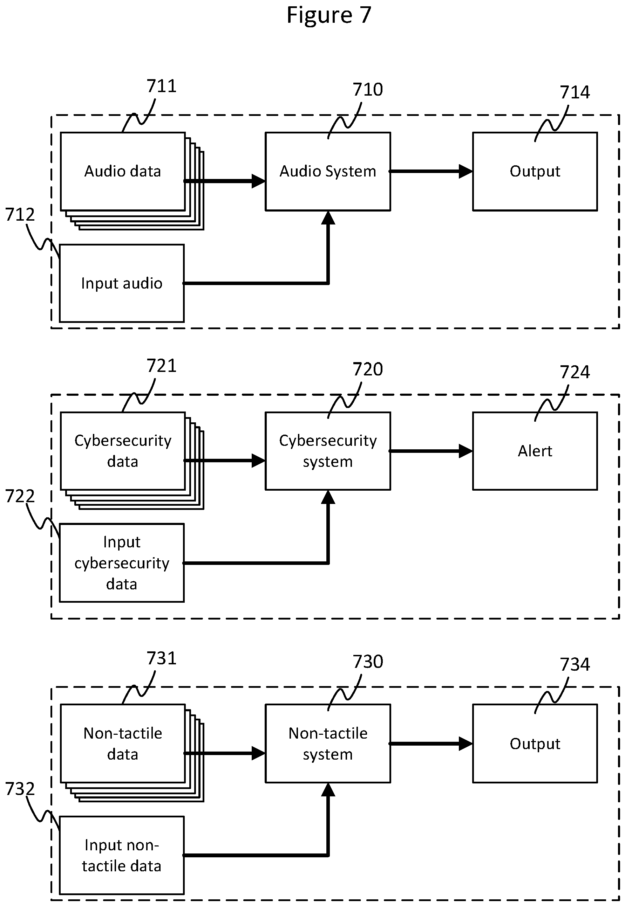

Figure 7 illustrates further systems 710, 720, 730 that employ the techniques discussed herein. System 710 is trained using audio training data 711, and thus can identify similar input audio data 712, and provide appropriate output 714. For example, the system 710 may identify a particular speaker based on samples of their voice. The output 714 may for example include providing an alert, or adjusting the volume of an audio output (e.g. to mute or remove certain speakers, or to make the voice of other speakers more prominent).

System 720 is trained on cybersecurity data 721 indicative of a cybersecurity risk or anomaly. For example, the cybersecurity data 721 may be representative of network log data, access requests, or other similar data associated with cybersecurity incidents. The network log data may comprise a record (e.g. in text or a structured format) of network activity or events. The system 720 may then identify occurrences of similar incidents in input alert data 722 and provide an alert 724. Additionally or alternatively, the system 720 may carry out suitable security mitigation actions, such as adjusting firewall settings, changing access rights and the like.

System 730 is trained on sensor data 731 representative of a non-visual tactile aspect of an object. For example, the sensor data 731 may be indicative of the smell or taste of the object. Accordingly, the system 730 is configured to identify similar smelling or tasting objects based on input data 732, and provide appropriate output 734.

It will be appreciated that these are selection of example applications. The techniques herein may be employed in various other settings, including in wearable devices (e.g. detecting conditions from sensor data captured by wearable devices), in industrial settings in the processing of text and the like. In terms of industrial settings, the techniques may be employed in relation to sensor data monitoring manufacturing lines, chemical processing plants and other such industrial processes. In response to determinations based on the sensor data, conditions of the industrial process or environment may be altered, for example by providing control input that activates actuators, valves or causes a machine to perform an action.

The references herein to similarity "values", "scores", "measures" and "metrics" will be understood to be interchangeable. That is to say, these terms merely refer a numerical value reflective of the similarity of two vectors, and there is no particular meaning implied by the use of one of these terms over another.

Whilst ProtoNets have been discussed in detail above, it will be appreciated that these techniques are broadly applicable to any learning technique that generates a vector representative of a class of training data items.

Advantageously, the techniques discussed herein calculate similarity as part of a machine learning classification system in a manner that permits easy and reliable adjustment or tuning of the threshold that is applied to that similarity. This enables improved output, because the user can set a threshold that has the desired balance between precision and recall.

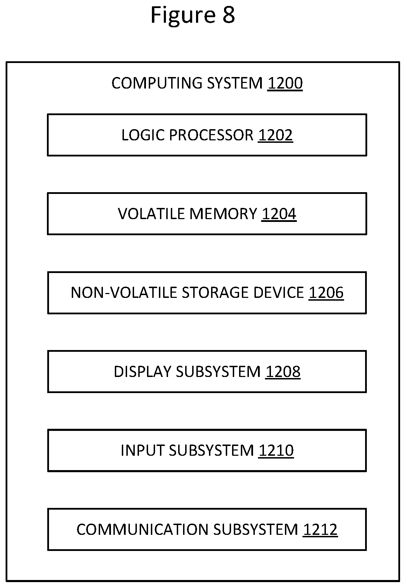

FIG. 8 schematically shows a non-limiting example of a computing system 1200 that can enact one or more of the methods and processes described above. Computing system 1200 is shown in simplified form. Computing system 1200 may embody any of the computing systems 100, 500, 600, 710, 720, or 730 described above. Computing system 1200 may take the form of one or more personal computers, server computers, tablet computers, home-entertainment computers, network computing devices, gaming devices, mobile computing devices, mobile communication devices (e.g., smart phone), and/or other computing devices, and wearable computing devices such as smart wristwatches and head mounted augmented reality devices.

Computing system 1200 includes a logic processor 1202, volatile memory 1204, and a non-volatile storage device 1206. Computing system 1200 may optionally include a display subsystem 1208, input subsystem 1210, communication subsystem 1212, and/or other components not shown in FIG. 8.

Logic processor 1202 includes one or more physical devices configured to execute instructions. For example, the logic processor may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors (hardware) configured to execute software instructions. Additionally or alternatively, the logic processor may include one or more hardware logic circuits or firmware devices configured to execute hardware-implemented logic or firmware instructions. Processors of the logic processor 1202 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 1206 includes one or more physical devices configured to hold instructions executable by the logic processors to implement the methods and processes described herein. When such methods and processes are implemented, the state of non-volatile storage device 1206 may be transformed-e.g., to hold different data.

Non-volatile storage device 1206 may include physical devices that are removable and/or built-in. Non-volatile storage device 1206 may include optical memory (e g., CD, DVD, HD-DVD, Blu-Ray Disc, etc ), semiconductor memory (e g., ROM, EPROM, EEPROM, FLASH memory, etc.), and/or magnetic memory (e.g., hard-disk drive, floppy-disk drive, tape drive, MRAM, etc.), or other mass storage device technology. Non volatile storage device 1206 may include nonvolatile, dynamic, static, read/write, read-only, sequential-access, location-addressable, file-addressable, and/or content-addressable devices. It will be appreciated that non-volatile storage device 1206 is configured to hold instructions even when power is cut to the non-volatile storage device 1206.

Volatile memory 1204 may include physical devices that include random access memory. Volatile memory 1204 is typically utilized by logic processor 1202 to temporarily store information during processing of software instructions. It will be appreciated that volatile memory 1204 typically does not continue to store instructions when power is cut to the volatile memory 1204.

Aspects of logic processor 1202, volatile memory 1204, and non-volatile storage device 1206 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 1200 typically implemented in software by a processor to perform a particular function using portions of volatile memory, which function involves transformative processing that specially configures the processor to perform the function. Thus, a module, program, or engine may be instantiated via logic processor 1202 executing instructions held by non-volatile storage device 1206, using portions of volatile memory 1204. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 1208 may be used to present a visual representation of data held by non-volatile storage device 1206. The visual representation may take the form of a graphical user interface (GUI). As the herein described methods and processes change the data held by the non-volatile storage device, and thus transform the state of the non-volatile storage device, the state of display subsystem 1208 may likewise be transformed to visually represent changes in the underlying data. Display subsystem 1208 may include one or more display devices utilizing virtually any type of technology. Such display devices may be combined with logic processor 1202, volatile memory 1204, and/or non-volatile storage device 1206 in a shared enclosure, or such display devices may be peripheral display devices.

When included, input subsystem 1210 may comprise or interface with one or more user-input devices such as a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity; and/or any other suitable sensor.

When included, communication subsystem 1212 may be configured to communicatively couple various computing devices described herein with each other, and with other devices. Communication subsystem 1212 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow computing system 1200 to send and/or receive messages to and/or from other devices via a network such as the internet.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (e.g. a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

Set out below are further aspects of the disclosure and optional features thereof.

In a first aspect, there is provided a computer-implemented method of classifying an input data item, comprising: receiving a maximum similarity value, wherein the maximum similarity value is representative of a similarity between: a prototype vector representative of a class of data items and a most similar training data vector of a plurality of training data vectors in the class of data items from which the prototype vector is calculated; receiving an input data item; generating an input vector from the input data item; calculating a first similarity value between the input vector and the prototype vector; calculating a second similarity value based on the first similarity value and the maximum similarity value; determining that the input data item is a member of the class of data items based on the second similarity value.

The method may further comprise, based on determining that the input data item is a member of the class of data items, performing at least one of: modifying an image; carrying out a security mitigation action; activating an alarm system, and providing control input to a machine or vehicle. Modifying an image may comprise obscuring a part of the image, or labelling the image. The security mitigation action may be adjusting firewall settings or access rights. The control input to the vehicle may cause the vehicle to change velocity or direction. The control input to the machine may alter conditions of an industrial process or environment.

Determining that the input data item is a member of the class of data items may comprise applying a threshold to the second similarity value.

Calculating the second similarity value may comprise dividing the first similarity value by the maximum similarity value.

The first similarity value may be a cosine similarity between the input vector and the prototype vector. The first similarity value may be one of a Euclidean distance, Manhattan distance or angular similarity between the input vector and the prototype vector.

The input data item may be captured by a sensor. Accordingly, the input data item may be sensor data. Determining that the input data item is a member of the class of data items may comprise recognizing an object based on the input data item.

The input data item may comprise one of: an image, audio data, sensor data representative of a non-visual tactile aspect of an object or cybersecurity data. The cybersecurity data may comprise network log data, suitably representative of network activity or events. The class of data items may correspond to one of: images comprising an object; audio data with a speaker; cybersecurity data indicative of a cybersecurity risk or incident; an object having a non-visual tactile aspect represented by sensor data. Images comprising an object may be images comprising a particular or predetermined object. That is to say, all of the data items in the class may comprise the same object. Determining that the input data item is a member of the class of data items may comprise determining that the input data item is an image also comprising the same object.

The method may comprise outputting an alert in response to determining that the input data item is a member of the class of data items. The method may comprise outputting the alert in response to determining that the input data item comprises the predetermined object. The alert may be an auditory output or a visual output, suitably provided via a user interface. In the event that the input data item comprises cybersecurity data, the method may comprise performing a security mitigation action in response to determining that the cybersecurity data is indicative of a cybersecurity risk or incident.

The input data item may be an input image. The class of data items may correspond to images comprising an object. Determining that the input image is a member of the class of data items may comprise determining that the input image comprises the object. The method may further comprise providing an audio alert to in response to determining that the input image comprises the object.

The input data item may be an input cybersecurity data item. The class of data items may correspond to cybersecurity data indicative of a cybersecurity risk. Determining that the input cybersecurity data item is a member of the class of data items may comprise determining that the input cybersecurity data item is indicative of a cybersecurity risk. The method may further comprise performing a security mitigation action in response to determining that the input cybersecurity data item is indicative of a cybersecurity risk.

In a second aspect, there is provided a computer implemented method of training a machine learning model to classify an input data item, the method comprising: receiving a plurality of training data items, each training data item having a respective label drawn from a set of labels; generating a training data vector from each training data item of the plurality of training data items, so as to generate a plurality of training data vectors; for each label of the set of labels: determining, from the plurality of training data vectors, a respective prototype vector representative of training data items of the plurality of training data items having the label; calculating a plurality of similarity values, each similarity value calculated based on a respective training data vector of the plurality of training data vectors having the label and the respective prototype vector; selecting a maximum similarity value of the plurality of similarity values; and storing the respective prototype vector and the maximum similarity value.

This aspect may also be termed a method of personalising a machine learning model. That is to say, this aspect may relate to the steps of further training the model in a "few shot" manner.

The plurality of similarity values may be cosine similarity values. The plurality of similarity values may be one of a Euclidean distance values, Manhattan distance values or angular similarity values between the training data vector and the prototype vector.

The training data items may comprise sensor data representative of an object to be recognized in the input data item. The training data items may comprise training images. The input data item may comprise an input image. The method may further comprise capturing the training images. The training data items may comprise audio data or network log data.

The model may be a ProtoNets model.

The method may further comprise a pretraining phase, wherein the pretraining phase comprises learning a plurality of trainable parameters of an embedding model for a set of initial training data, the embedding model being configured to generate the training data vector from the training data item and/or input vector from the input data item. Learning the plurality of trainable parameters may comprise learning an embedding in which points in an embedding space cluster around the prototype vector for the class of data items. The set of initial training data may comprise a plurality of initial training data items, each having a label drawn from an initial set of labels. The method may comprise randomly selecting a subset of the initial set of labels, and for each label in the subset randomly selecting two subsets of the initial training data items having the label. The method may comprise generating a respective training prototype vector for each label in the subset from a first of the two subsets. The method may comprise calculating a loss based on each training prototype vector and the corresponding second of the two subsets. The method may comprise updating the trainable parameters based on the loss.

A training episode may comprise randomly selecting the subset of the initial set of labels, randomly selecting the two subsets, generating the respective training prototype vector, calculating the loss and updating the trainable parameters. The method may comprise carrying out a plurality of training episodes.

The methods of the first aspect and the second aspect may be combined. That is to say, the disclosure extends to a method of combining the training and inference steps set out above. Furthermore, the optional features of the first aspect and second aspect may be combined in any combination. That is to say, optional features of the first aspect may be included in the second aspect and vice versa.

In a third aspect of the disclosure, there is provided a system comprising a processor and a memory, the memory storing instructions, which when executed by the processor, cause the system to carry out any of the methods disclosed herein.

A non-transitory computer-readable storage medium comprising instructions, which when executed by a processor, cause the processor to carry out any of the methods disclosed herein.

## Claims

1. A computer-implemented method of classifying an input data item, comprising:
receiving a maximum similarity value (304, S401), wherein the maximum similarity value (304) is representative of a similarity between:
a prototype vector (302) representative of a class of data items, and
a most similar training data vector of a plurality of training data vectors (301) in the class of data items from which the prototype vector (302) is calculated;
receiving an input data item (S402);
generating an input vector from the input data item (S403);
calculating a first similarity value between the input vector and the prototype vector (S404);
calculating a second similarity value based on the first similarity value and the maximum similarity value (S405); and
determining that the input data item is a member of the class of data items based on the second similarity value (S406).

2. The computer-implemented method of claim 1, further comprising, based on determining that the input data item is a member of the class of data items, performing at least one of:
modifying an image;
carrying out a security mitigation action;
activating an alarm system, and
providing control input to a machine or vehicle.

3. The computer-implemented method of claim 1 or 2, wherein determining that the input data item is a member of the class of data items comprises applying a threshold to the second similarity value.

4. The computer-implemented method of any preceding claim, wherein calculating the second similarity value comprises dividing the first similarity value by the maximum similarity value (304).

5. The computer-implemented method of any preceding claim, wherein the first similarity value is a cosine similarity between the input vector and the prototype vector (302).

6. The computer-implemented method of any preceding claim, wherein the input data item is captured by a sensor (131, 132).

7. The computer-implemented method of any preceding claim, wherein the input data item comprises one of: an image, audio data, sensor data representative of a non-visual tactile aspect of an object or cybersecurity data.

8. The computer-implemented method of claim 7, wherein:
the input data item is an input image;
the class of data items corresponds to images comprising an object,
determining that the input image is a member of the class of data items comprises determining that the input image comprises the object; and
the method further comprises providing an audio alert to in response to determining that the input image comprises the object.

9. The computer-implemented method of claim 7, wherein:
the input data item is an input cybersecurity data item;
the class of data items corresponds to cybersecurity data indicative of a cybersecurity risk;
determining that the input cybersecurity data item is a member of the class of data items comprises determining that the input cybersecurity data item is indicative of a cybersecurity risk; and
the method further comprises performing a security mitigation action in response to determining that the input cybersecurity data item is indicative of a cybersecurity risk.

10. A computer-implemented method of training a machine learning model to classify an input data item, the method comprising:
receiving a plurality of training data items, each training data item having a respective label drawn from a set of labels (S211);
generating a training data vector from each training data item of the plurality of training data items, so as to generate a plurality of training data vectors (S212);
for each label of the set of labels:
determining, from the plurality of training data vectors, a respective prototype vector (302) representative of training data items of the plurality of training data items having the label (S213);
calculating a plurality of similarity values (303), each similarity value (303) calculated based on a respective training data vector of the plurality of training data vectors having the label and the respective prototype vector (S214);
selecting a maximum similarity value (304) of the plurality of similarity values (S215); and
storing the respective prototype vector (302) and the maximum similarity value (S216).

11. The computer-implemented method of claim 10, wherein the training data items comprise sensor data representative of an object to be recognized in the input data item.

12. The computer-implemented method of any of claims 10 or 11, wherein the training data items comprise training images, the input data item comprises an input image and the method further comprises capturing the training images.

13. The computer-implemented method of claim 10 or 11, wherein the training data items comprise audio data or cybersecurity data.

14. A system (100) comprising a processor (110) and a memory (120), the memory (120) storing instructions, which when executed by the processor (110), cause the system (100) to:
receive a maximum similarity value (304), wherein the maximum similarity value (304) is representative of a similarity between:
a prototype vector (302) representative of a class of data items, and
a most similar training data vector of a plurality of training data vectors (301) in the class of data items from which the prototype vector is calculated;
receive an input data item;
generate an input vector from the input data item;
calculate a first similarity value between the input vector and the prototype vector (302);
calculate a second similarity value based on the first similarity value and the maximum similarity value; and
determine that the input data item is a member of the class of data items based on the second similarity value.

15. The system (100) of claim 14, further comprising, based on determining that the input data item is a member of the class of data items, performing at least one of:
modifying an image;
carrying out a security mitigation action;
activating an alarm system, and
providing control input to a machine or vehicle.
the instructions to determine that the input cybersecurity data item is a member of the class of data items comprises determining that the input cybersecurity data item is indicative of a cybersecurity risk; and
the system (100) is further configured to perform a security mitigation action in response to determining that the input cybersecurity data item is indicative of a cybersecurity risk.
